(19) Europäisches Patentamt
European Patent Office
Office européen des brevets

(11) **EP 1 934 397 B1**

(12) **EUROPEAN PATENT SPECIFICATION**

(45) Date of publication and mention
of the grant of the patent:
**27.02.2013 Bulletin 2013/09**

(21) Application number: **06779637.5**

(22) Date of filing: **11.09.2006**

(51) Int Cl.:
*D06M 15/643* (2006.01)    *D06M 15/647* (2006.01)
*C08L 83/04* (2006.01)     *D06N 3/12* (2006.01)

(86) International application number:
**PCT/GB2006/050283**

(87) International publication number:
**WO 2007/039763 (12.04.2007 Gazette 2007/15)**

(54) **A LIQUID SILICONE RUBBER COMPOSITION FOR TEXTILE COATING**

FLÜSSIGE SILICONKAUTSCHUKZUSAMMENSETZUNG FÜR TEXTILE BESCHICHTUNG

MÉLANGE CAOUTCHOUTÉ DE SILICONE LIQUIDE POUR ENDUCTION TEXTILE

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.10.2005 GB 0520145**

(43) Date of publication of application:
**25.06.2008 Bulletin 2008/26**

(73) Proprietors:
• **Dow Corning Limited**
**South Glamorgan CF63 2YL**
**Wales (GB)**
• **Dow Corning Taiwan Inc**
**Nei Hu Taipei**
**11493 (TW)**

(72) Inventor: **MEI, Wan-Ping**
**Taipei (TW)**

(74) Representative: **Gillard, Richard Edward et al**
**Elkington and Fife LLP**
**Thavies Inn House**
**3-4 Holborn Circus**
**London EC1N 2HA (GB)**

(56) References cited:
**EP-A- 0 661 398     EP-A2- 0 819 735**
**US-B1- 6 677 393**

**Description**

This invention relates to a liquid silicone rubber (LSR) composition useful for textile coating, in particular for textile coating by screen-printing.

Liquid silicone rubber ("LSR") compositions, which are prior to curing in the form of liquids and after curing forming an elastomeric product are well known in silicone industry. LSR has been attractively used in textile printing applications due to the soft hand feel and washing durability of the resulting treated textiles.

There are many prior art references relating to LSR and its applications. Japanese Patent Publication No. H03-100058 disdoses a liquid silicone rubber composition comprising (a) an organopolysiloxane containing at least two silicon-bonded unsaturated radicals, (b) organohydrogenpolysiloxane containing at least three silicon-bonded hydrogen atoms, (c) porous inorganic finely divided powder carrying a liquid material to provide antistatic property, and (d) platinum catalyst. The liquid material exemplifies fluorine-containing surfactant and silicone polyether copolymer. This LSR is useful for a fixing roll.

Japanese Patent Publication No. 2002-302607 (which corresponds to US 6761673) disdoses a liquid silicone rubber composition comprising alkenyl-containing organopolysiloxane, silicon-bonded hydrogen-containing organohydrogenpolysiloxane, cyclic diorganopolysiloxane containing at least three alkenyl radicals, platinum catalyst, and silica. This LSR is useful for a fixing roll where fluorine-containing resin is applied onto the LSR as top coating.

Japanese Patent Publication No. H09-87585 disdoses a liquid silicone rubber composition comprising alkenyl-containing polydiorganosiloxane, organopolysiloxane resin, inorganic filler, organohydrogenpolysiloxane, platinum catalyst, epoxidized-containing organosilicon compound, and organic titanium compound. This LSR is useful for air-bag coatings.

EP0398745 disdoses a hydrosilylation cured silicone composition comprising two silicon containing non-ionic surface active agents, one comprising silicon bonded hydrogen atoms or silphatic unsaturated hydrocarbon radicals and the other having a hydrophobic silicone portion and at least one hydrophilic polyol portion. Such compositions are used as a dental impression material.

However, currently available LSRs used to treat textiles tend to provide textiles with a tacky and dissatisfactory film appearance. Whilst this problem can be solved by increasing the viscosity and/or crosslinking density of liquid polydiorganosiloxane, such solutions however cause other problems, in particular they result in compositions which prove difficult to coat onto textile and/or increase stiffness of the resulting coated textiles.

US 6,677,393 discloses silicone-based addition-crosslinking impression materials, containing (a) organopolysiloxanes with at least two unsaturated groups in the molecule, (b) organohydrogen polysiloxanes with at least three Si-H groups in the molecule, (c) optionally, organopolysiloxanes without reactive groups, (d) platinum catalyst, (e) optionally, hydrophilizang agent, (f) filler, (g) optionally, further customary additives, auxiliaries and dyes, (h) polyalkyene oxides and/or their derivatives with an average molar mass of $M_w$>3000 at the rate of 0.001 to 1.0 wt.-% relative to the total mass of the cured material. Such materials are useful in dental silicone impression compositions.

EP 0 819 735 discloses aqueous emulsions consisting essentially of at least one organopolysiloxane A) containing at least 2 unsaturated hydrocarbon groups, at least one methyl hydrogen polysiloxane B), at least one unreactive organopolysiloxane C), at least one catalyst D) from the platinum group, at least one inhibitor E), optionally, emulsifiers and/or thickeners F), and optionally, additives and/or auxiliary substances G). The emulsions are easy to prepare and are stable in storage, in which dusting may be largely avoided in high-quality coatings and in which foaming may also be largely suppressed.

EP 0 661 398 discloses textile fibre treatment compositions comprising (A) an allyl ester, a vinyl ester or an unsaturated acetate; (B) an organohydrogensiloxane; (C) a metal catalyst and (D) an organosilicon compound.

The present invention relates to a liquid silicone rubber (LSR) composition useful for textile coating, in particular for textile coating by screen-printing. The LSR composition of the present invention provides improved film appearance and improved physical properties such as softness, low-tackiness, and elongation.

The present invention provides a liquid silicone rubber (LSR) composition useful for textile coating, which comprises:

(A) 100 parts by weight of a liquid polydiorganosiloxane containing at least two alkenyl radicals in each molecule,
(B) an organohydrogenpolysiloxane containing at least three silicon-bonded hydrogen atoms in each molecule, in an amount that the molar ratio of the total number of the silicon-bonded hydrogen atoms in this ingredient to the total quantity of all alkenyl radicals in ingredient (A) is from 0.5:1 to 20:1,
(C) from 5 to 50 parts by weight of a reinforcing filler, based on the amount of ingredient (A),
(D) from 0.05 to 4.5 parts by weight of a polydiorganosiloxane-polyether copolymer containing from 5 to 50 percent by mole of the polyether, based on 100 parts by weight of.the combined weight of ingredients (A), (B), and (C), wherein the polydiorganosiloxane-polyether copolymer is represented by the formula:

$$X_w R^1_{3-w} SiO(R^2 R^3 SiO)_d (R^4 XSiO)_d SiR^1_{3-w} X_w \qquad (II)$$

Wherein X is $-R^5-(OC_2H_4)_y(OA)_z E$

in which $R^1$, $R^2$, $R^3$, and $R^4$ are independently selected from monovalent saturated hydrocarbon radicals and monovalent aromatic hydrocarbon radicals; E is identical or different and selected from hydroxy, alkoxy, and carboxyl; A and $R^5$ both denotes an alkylene; w is an integer of 0, 1, or 2, and must be 1 or 2 when d' is zero; d is an integer of 0 to 200, and d' is an integer of 0 to 15, where d and d' are to provide ingredient (D) containing from 5 to 50 percent by mole of polyether per molecule; y and z are independently integer of 0 to 30, the sum of y and z being in the range from 2 to 50, and

(E) a hydrosilylation catalyst.

ingredients that may be contained in the LSR composition of the present invention are discussed below:

(A) Liquid alkenyl-containing polydiorganosiloxane

Ingredient (A) is a liquid polydiorganosiloxane containing at least two silicon-bonded alkenyl radicals in each molecule. Suitable alkenyl radicals in ingredient (A) preferably contain from 2 to 10 carbon atoms, preferred example, vinyl, isopropenyl, allyl, and 5-hexenyl. Ingredient (A) preferably additionally comprises silicon-bonded organic groups other than alkenyl radicals. Such silicon-bonded organic groups are typically selected from monovalent saturated hydrocarbon radicals, which preferably contain from 1 to 10 carbon atoms, and monovalent aromatic hydrocarbon radicals, which preferably contain from 6 to 12 carbon atoms, which are unsubstituted or substituted with the groups that do not interfere with curing of this inventive composition, such as halogen atoms. Preferred species of the silicon-bonded organic groups are, for example, alkyl groups such as methyl, ethyl, and propyl; halogenated alkyl groups such as 3,3,3-trifluoropropyl; and aryl groups such as phenyl.

The molecular structure of ingredient (A) is typically linear, however, there can be some branching due to the presence of trivalent siloxane units within the molecule. To achieve a useful level of physical properties in the elastomer prepared by curing the LSR composition of the present invention, the molecular weight of ingredient (A) should be sufficient so that it achieves a viscosity of at least 0.1 Pa.s at 25 °C. The upper limit for the molecular weight of ingredient (A) is not specifically restricted and is typically limited only by the processability of the LSR composition of the present invention.

Preferred embodiments of ingredient (A) are polydiorganosiloxanes containing alkenyl radicals at the two terminals and are represented by the general formula (I):

$$R'R''R'''SiO-(R''R'''SiO)_m-SiR'''R''R'$$

In formula (I), each R' is an alkenyl radical, which preferably contains from 2 to 10 carbon atoms, such as vinyl, allyl, and 5-hexenyl.

R" does not contain ethylenic unsaturation, Each R" may be the same or different and is individually selected from monovalent saturated hydrocarbon radical, which preferably contain from 1 to 10 carbon atoms, and monovalent aromatic hydrocarbon radical, which preferably contain from 6 to 12 carbon atoms. R" may be unsubstituted or substituted with one or more groups that do not interfere with curing of this inventive composition, such as halogen atoms. R''' is R' or R". m represents a degree of polymerization suitable for ingredient (A) to have a viscosity of at least 0.1 Pa.s at 25 °C, preferably from 0.1 to 300 Pa.s.

Preferably, all R" and R''' groups contained in a compound in accordance with formula (I) are methyl groups. Alternatively at least one R" and/or R''' group in a compound in accordance with formula (I) is methyl and the others are phenyl or 3,3,3-trifluoropropyl. This preference is based on the availability of the reactants typically used to prepare the polydiorganosiloxanes (ingredient (A)) and the desired properties for the cured elastomer prepared from compositions comprising such polydiorganosiloxanes.

Preferred examples of ingredient (A) containing ethylenically unsaturated hydrocarbon radicals only in terminal groups include, but are not limited to, dimethylvinylsiloxy-terminated polydimethylsiloxane, dimethylvinylsiloxy-terminated polymethyl-3,3,3-trifluoropropylslioxane, dimethylvinylsiloxy-terminated dimethylsiloxane-3,3,3-trifluoropropylmethylsiloxne copolymer, and dimethylvinylsiloxy-terminated dimethylsiloxane/methylphenylsiloxane copolymer.

Generally, ingredient (A) has a viscosity of at least 0.1 Pa.s at 25 °C, preferably from 0.1 to 300 Pa.s. more preferably 0.1 to 100 Pa.s at 25 °C.

(B) Organohydrogenpolysiloxane

Ingredient (B) is an organohydrogenpolysiloxane, which operates as a cross-linker for curing ingredient (A), by the addition reaction of the silicon-bonded hydrogen atoms in ingredient (B) with the alkenyl groups in ingredient (A) under the catalytic activity of ingredient (E) to be mentioned below. Ingredient (B) normally contains 3 or more silicon-bonded hydrogen atoms so that the hydrogen atoms of this ingredient can sufficiently react with the alkenyl radicals of ingredient (A) to form a network structure therewith and thereby cure the composition..

The molecular configuration of ingredient (B) is not specifically restricted, and it can be straight chain, branch-containing straight chain, or cyclic. While the molecular weight of this ingredient is not specifically restricted, the viscosity is preferably from 0.001 to 50 Pa.s at 25 °C in order to obtain a good miscibility with ingredient (A).

Ingredient (B) is preferably added in an amount such that the molar ratio of the total number of the silicon-bonded hydrogen atoms in ingredient (B) to the total number of all alkenyl radicals in ingredient (A) is from 0.5:1 to 20:1. When this ratio is less than 0.5:1, a well-cured composition will not be obtained. When the ratio exceeds 20:1, there is a tendency for the hardness of the cured composition to increase when heated.

Examples of ingredient (B) include but are not limited to:

(i) trimethylsiloxy-terminated methylhydrogenpolysiloxane,
(ii) trimethylsiloxy-terminated polydimethylsiloxane-methylhydrogensiloxane,
(iii) dimethylhydrogensiloxy-terminated dimethylsiloxane-methylhydrogensiloxane copolymers,
(iv) dimethylsiloxane-methylhydrogensiloxane cyclic copolymers,
(v) copolymers composed of $(CH_3)_2HSiO_{1/2}$ units and $SiO_{4/2}$ units, and
(vi) copolymers composed of $(CH_3)_3SiO_{1/2}$ units, $(CH_3)_2HSiO_{1/2}$ units, and $SiO_{4/2}$ units.

(C) Reinforcing filler

To achieve high level of physical properties that characterize some types of cured elastomer that can be prepared using the LSR composition of the present invention, it may be desirable to include a reinforcing filler such as finely divided silica. Silica and other reinforcing fillers are often treated with one or more known filler treating agents to prevent a phenomenon referred to as "creping" or "crepe hardening" during processing of the curable composition.

Finely divided forms of silica are preferred reinforcing fillers. Colloidal silicas are particularly preferred because of their relatively high surface area, which is typically at least 50 square meters per gram. Fillers having surface areas of at least 200 square meters per gram are preferred for use in the present invention. Colloidal silicas can be provided in the form of precipitated or fumed silica. Both types of silica are commercially available.

The amount of finely divided silica or other reinforcing filler used in the LSR composition of the present invention is at least in part determined by the physical properties desired in the cured elastomer. The LSR composition of the present invention typically comprises from 5 to 50 parts, preferably from 10 to 30 parts by weight of a reinforcing filler (e.g., silica), based on the weight of the polydiorganosiloxane (ingredient (A)), preferably 5 to 50 parts and more preferably 10 to 30 parts for every 100 parts of ingredient A.

When the filler is naturally hydrophilic (e.g. untreated silica fillers), it is preferably treated with a treating agent This may be prior to introduction in the composition or in situ (i.e. in the presence of at least a portion of the other ingredients of the LSR composition of the present invention by blending these ingredients together until the filler is completely treated and uniformly dispersed to for a homogeneous material). Preferably, untreated filler is treated in situ with a treating agent in the presence of ingredient (A).

Preferably the filler is surface treated using for example with a fatty acid or a fatty acid ester such as a stearate, or with organosilanes, polydiorganosiloxanes, or organosilazanes hexaalkyl disilazane or short chain siloxane diols to render the filler(s) hydrophobic and therefore easier to handle and obtain a homogeneous mixture with the other ingredients. The surface treatment of the fillers makes the fillers easily wetted by the silicone polymer. These surface modified fillers do not clump, and can be homogeneously incorporated into the silicone polymer. This results in improved room temperature mechanical properties of the uncured compositions.

Preferably the filler treating agent can be any low molecular weight organosilicon compounds disclosed in the art applicable to prevent creping of organosiloxane compositions during processing.

The treating agents are exemplified but not limited to liquid hydroxyl-terminated polydiorganosiloxane containing an average from 2 to 20 repeating units of diorganosiloxane in each molecule, hexaorganodisiloxane, hexaorganodisilazane, and the like. The hexaorganodisilazane intends to hydrolyze under conditions used to treat the filler to form the organosilicon compounds with hydroxyl groups. Preferably, at least a portion of the silicon-bonded hydrocarbon radicals present in the treating agent are identical to a majority of the hydrocarbon radicals present in ingredients (A) and (B). A small amount of water can be added together with the silica treating agent(s) as processing aid.

It is believed that the treating agents function by reacting with silicon-bonded hydroxyl groups present on the surface of the silica or other filler particles to reduce interaction between these particles.

The filler may be treated with the treating agent prior to formulating, and the treated filler is commercially available.

(D) Polydiorganosiloxane-polyether copolymer

Ingredient (D) is a polydiorganosiloxane-polyether copolymer, which is represented by the general formula (II):

$$X_wR^1_{3-w}SiO(R^2R^3SiO)_d(R^4XSiO)_{d'}SiR^1_{3-w}X_w \quad \text{(II)}$$

(where X is $-R^5-(OC_2H_4)_y(OA)_zE$)

wherein $R^1$, $R^2$, $R^3$, and $R^4$ are independently selected from monovalent saturated hydrocarbon radicals, which preferably contain from 1 to 10 carbon atoms, and monovalent aromatic hydrocarbon radicals, which preferably contain from 6 to 12 carbon atoms; E is identical or different and selected from hydroxy, alkoxy preferably containing from 1 to 6 carbon atoms, and carboxyl; A is an alkylene preferably containing from 1 to 6 carbon atoms; $R^5$ denotes an alkylene radical preferably containing 2 to 6 carbon atoms; w is an integer of 0, 1, or 2, and must be 1 or 2 when d' is zero; d is an integer of 0 to 200, and d' is an integer of 0 to 15, where d and d' are present in amounts relative to each other such that ingredient (D) contains from 5 to 50 percent by mole of polyether per molecule; y and z are independently integer of 0 to 30, the sum of y and z being in the range from 2 to 50.

$R^1$, $R^2$, $R^3$, and $R^4$ are preferably methyl. $R^5$ is preferably propylene or iso-butylene. E is preferably hydroxyl, methoxy, or acetoxy. A is preferably propylene, iso-propylene, or butylene.

Ingredient (D) must have from 5 to 50 percent by mole of polyether units. Ingredient (D) is insoluble but can be dispersed in a polydiorganosiloxane fluid (such as ingredients (A) and (B) described above. Ingredient (D) shows a trend of having increasing specific gravity with increasing polyether content. When ingredient (D) has more than 50 percent by mole of polyether groups, its specific gravity becomes far from that of the polydiorganosiloxane fluid, which clauses separation. To maintain stability after mixing, the upper limit of content of polyether is 50 percent by mole, and preferably 30 percent by mole. It is known that the percent by mole of polyether groups may be calculated using the following formula

$$\frac{\text{number of siloxane units bonded to polyether groups}}{\text{total number of siloxane units in the molecule}} \times 100$$

Ingredient (D) is added in an amount from 0.05 to 4.5 parts by weight, for every 100 parts by weight of the combined weight of ingredients (A), (B), and (C).

(E) Hydrosilylation catalyst

Curing of the LSR composition of the present invention is catalyzed by ingredient (E), which is a hydrosilylation catalyst that is a metal selected from the platinum group of the periodic table, or a compound of such metal. The metals include platinum, palladium, and rhodium. Platinum and platinum compounds are preferred due to the high activity level of these catalysts in hydrosilylation reaction.

Example of preferred curing catalysts include but are not limited to platinum black, platinum on various solid supports, chloroplatinic acids, alcohol solutions of chloroplatinic acid, and complexes of chloroplatinic acid with liquid ethylenically unsaturated compounds such as olefins and organosiloxanes containing ethylenically unsaturated silicon-bonded hydrocarbon radicals. Complexes of chloroplatinic acid with organosiloxanes containing ethylenically unsaturated hydrocarbon radicals are described in US 3,419,593.

The concentration of ingredient (E) in the LSR composition of the present invention is equivalent to a platinum-group metal concentration from 0.1 to 500 parts by weight of platinum-group metal, per million parts (ppm), based on the combined weight of ingredients (A) and (B).

Mixtures of the aforementioned ingredients (A), (B), and (E) may begin to cure at ambient temperature.

To obtain a longer working time or pot life of the LSR composition of the present invention, a suitable inhibitor can be used in order to retard or suppress the activity of the catalyst. For example, the alkenyl-substituted siloxanes as described in US 3,989,887 may be used. Cyclic methylvinylsiloxanes are preferred.

Another class of known inhibitors of platinum catalysts includes the acetylenic compounds disclosed in US 3,445,420. Acetylenic alcohols such as 2-methyl-3-butyn-2-ol constitute a preferred class of inhibitors that will suppress the activity of a platinum-containing catalyst at 25 °C. Compositions containing these inhibitors typically require heating at temperature of 70 °C or above to cure at a practical rate.

Inhibitor concentrations as low as 1 mole of inhibitor per mole of the metal will in some instances impart satisfactory storage stability and cure rate. In other instances inhibitor concentrations of up to 500 moles of inhibitor per mole of the metal are required. The optimum concentration for a given inhibitor in a given composition is readily determined by routine experimentation.

## (F) Chain extender

If desired, the LSR composition of the present invention may comprise ingredient (F), which may be a disiloxane or a low molecular weight polyorganosiloxane containing two silicon-bonded hydrogen atoms at the terminal positions.

When ingredient (F) is a disiloxane, it is represented by the general formula $(HR^8_2Si)_2O$, and when ingredient (F) is a polyorganosiloxane, it has terminal units of the general formula $HR^a_2SiO_{1/2}$ and non-terminal units of the formula $R^b_2SiO$. In these formulae, $R^a$ and $R^b$ individually represent unsubstituted or substituted monovalent hydrocarbon radicals that are free of ethylenic unsaturation, which include, but are not limited to alkyl groups containing from 1 to 10 carbon atoms, substituted alkyl groups containing from 1 to 10 carbon atoms such as chloromethyl and 3,3,3-trifluoropropyl, cycloalkyl groups containing from 3 to 10 carbon atoms, aryl containing 6 to 10 carbon atoms, alkaryl groups containing 7 to 10 carbon atoms, such as tolyl and xylyl, and aralkyl groups containing 7 to 10 carbon atoms, such as benzyl.

Preferably, ingredient (F) is tetramethyldihydrogendisiloxane or dimethylhydrogen-terminated polydimethylsiloxane.

Ingredient (F) functions as chain extender for ingredient (A). In other words, ingredient (F) reacts with the alkenyl radicals of ingredient (A), thereby linking two or more molecules of ingredient (A) together and increasing its effective molecular weight and the distance between potential cross-linking sites.

Ingredient (F) may be added in an amount from 1 to 10 parts by weight, based on the weight of ingredient (A), preferably 1 to 10 parts per 100 parts of ingredient A.

The effect of the chain extender on the properties of the cured LSR composition is similar to that of using a higher molecular weight polyorganosiloxane, but without the processing and other difficulties associated with high viscosity curable organosiloxane composition.

Chain extenders suitable for use in the present compositions have viscosities from about 0.001 to 1 Pa.s at 25 °C, preferably from about 0.001 to 0.1 Pa.s, to maximize the concentration of silicon-bonded hydrogen atoms and minimize the viscosity of the LSR composition of the present invention.

The number of silicon bonded hydrogen groups provided in ingredient (F), when present, and in ingredient (B) is sufficient to provide the degree of crosslinking required to cure the LSR composition of the present invention to the desired physical property. The total quantity of silicon-bonded hydrogen atoms contributed by the crosslinker is such that the molar ratio of silicon bonded hydrogen atoms contributed by both the crosslinker and the chain extender to the vinyl or other alkenyl radicals present in the LSR composition of the present invention is from 0.5 to 20.

## (G) Additional optional ingredients

The LSR composition of the present invention may contain various optional ingredients that are conventionally utilized in such compositions, such as pigments and/or dyes. Any pigments and dyes, which are applicable to silicone elastomers or coating but do not inhibit the hydrosilylation catalyzed addition reaction, can be employed in this invention. The pigments and dyes include but are not limited to carbon black, titanium dioxide, chromium oxide, bismuth vanadium oxide and the like. In a preferred embodiment of the invention, the pigments and dyes are used in form of pigment master batch composed of them dispersed in the polydiorganosiloxane with a low viscosity (ingredient (A)) at the ratio of 25:75 to 70:30.

The other optional ingredients comprise, for example, non-reinforcing fillers, such as quartz, alumina, mica, and calcium carbonate; adhesion promoters; flame-retardants; and heat and/or ultraviolet light stabilizers.

The composition of the present invention may be prepared by combining all of ingredients at ambient temperature. Any mixing techniques and devices described in the prior art can be used for this purpose. The particular device to be used will be determined by the viscosities of ingredients and the final curable coating composition. Suitable mixers include but are not limited to paddle type mixers and kneader type mixers. Cooling of ingredients during mixing may be desirable to avoid premature curing of the composition.

The order for mixing ingredients is not critical in this invention. Preferably, it is desirable to prepare, at first, two parts, one comprising ingredient (A), some of ingredient (C) and if necessary, the inhibitor for the hydrosilylation catalyst, and the other comprising ingredient (B), the rest of ingredient (C) and if necessary, the inhibitor for the hydrosilylation catalyst, and where ingredient (D) may be added to either of the parts prior to combination of them. Then the two parts are mixed in the presence of ingredient (E) to form the LSR composition of the present invention.

The textile to be coated with the curable coating composition of the present invention includes but is not limited to cotton, polyester, nylon and mixtures thereof together or in combination with other materials such as a mixture of nylon comprising from 2 to 20 percent of an elasticated fibre such as Lycra® (trademark of Du Pont company).

The LSR composition of the present invention may be cured by heating at a temperature from 200 to 400 °C for 3 seconds to a few minutes. To obtain textiles having even better properties, such as with less damage, it is desirable that the LSR composition of the present invention is cured for a few seconds at the above-mentioned temperature, and repeat the heating after it is cooled to room temperature.

In working examples, the following ingredients defined as follows were used:

**TABLE I**

| | |
|---|---|
| Vi-Siloxane 1 | Vinyl-terminated polydimethylsiloxane having the viscosity of 55 Pa.s at 25 °C |
| Vi-Siloxane 2 | Vinyl-terminated polydimethylsiloxane having the viscosity of 2 Pa.s at 25 °C |
| H-Siloxane 1 | Trimethylsiloxy-terminated polydimethyl-methylhydrogensiloxane containing 0.12 % by weight of hydrogen atom bonded to silicon and the viscosity of 0.005 Pa.s at 25 °C |
| H-Siloxane 2 | Hydrogendimethylsiloxy-terminated polydimethylsiloxane having the viscosity of 0.011 Pa.s at 25 °C |
| Inhibitor 1 | Methylvinyl cyclosiloxane $(MeViSiO)_n$ (n<6) |
| Inhibitor 2 | 1-Ethynyl-I-cyclohexanol |
| Silica 1 | Hydrophobic treated fumed silica having the surface area of 225 $m^2/g$ |
| Catalyst 1 | A catalyst, which was a solution composed of 0.2 percent by weight of platinum-siloxane complex prepared from platinum dichloride and 1,3-divinyltetramethyldisiloxane according to method described in US 5,175,325, and 98 percent by weight of vinyldimethylsiloxy-terminated polydimethylsiloxane having the viscosity of 0.19 Pa.s at 25 °C and 1.8 percent by weight of 1,3-divinyltetramethyldisiloxane, to have platinum content of 1000 ppm. |

The silicone-polyether copolymer ("SPE") (ingredient (D)) employed in the working examples were represented by the following formula:

$$X_mMe_{3-m}SiO(Me_2SiO)_D(MeXSiO)_DSiMe_{3-m}X_m$$

(where X for the sake of these examples was $-(CH_2)_3(OCH_2CH_2)_p(OCH_2CH(CH_3))_qE$

**TABLE II**

| | Mole% | m | D | D' | P | Q | E |
|---|---|---|---|---|---|---|---|
| SPE1 | 7.7 | 0 | 22 | 2 | 12 | 0 | OAc |
| SPE2 | 8.3 | 0 | 108 | 10 | 18 | 18 | OAc |
| SPE3 | 13.3 | 1 | 13 | 2 | 12 | 0 | OH |
| SPE4 | 25.7 | 0 | 8.7 | 3.7 | 12 | 0 | OH |
| SPE5 | 33.3 | 0 | 0 | 1 | 7 | 0 | OH |
| SPE6 | 4.3 | 0 | 70 | 3.2 | 0 | 2 | OH |

(wherein the Mole % was of the polyether portion and the Ac was acetyl)

The above ingredients were mixed up in amounts shown in Table III to form homogeneous base compositions. First the fumed silica was placed in a container and mixed with the Vi-Siloxane with low viscosity first, and then other ingredients were added thereto. The SPE was selected from Table II and added to the composition in amount shown in Table IV during mixing procedure.

**TABLE III**

| | Base Composition |
|---|---|
| Vi-Siloxane 1 | 17.00 |
| Vi-Siloxane 2 | 54.03 |
| H-Siloxane 1 | 1.49 |
| H-Siloxane 2 | 3.43 |
| Inhibitor 1 | 0.07 |
| Inhibitor 2 | 0.06 |

(continued)

|  | Base Composition |
|---|---|
| Silica 1 | 23.92 |
| Total | 100.00 |

Pigment master batch in which white pigment of $TiO_2$ powder was dispersed in Vi-Siloxane 2 at the ratio of 65:35, was mixed with the base composition. Then platinum catalyst was added to the pigmented composition. The amounts of those ingredients to be added to the base composition were described in Table IV.

Paste coating composition was obtained and coated (printed) onto nylon fabric available for swimming suit with use of knife through a screen. It was cured for 1.5 seconds at a temperature of 400 °C and after pause for 1 minute, cured for another 1.5 seconds at the same temperature.

After curing, fabric having a coated film, applied in an amount of 60 grams per square meter, was evaluated by hand-feeling to determine tackiness or softness, and by repetition of folding to determine elongation. These performances were evaluated on a scale of E (Strongest) to A (Weakest) as shown in Table IV.

## TABLE IV

| Run | | No. 1 | No. 2 | No. 3 | No. 4 | No. 5 | No. 6 | No. 7 | No. 8 | No. 9 | No. 10 |
|---|---|---|---|---|---|---|---|---|---|---|---|
| Coating Composition (Unit: Parts by Weight) | | | | | | | | | | | |
| | Base composition | 100 | 100 | 100 | 100 | 100 | 100 | 100 | 100 | 100 | 100 |
| | Pigment | 5 | 5 | 5 | 5 | 5 | 5 | 5 | 5 | 5 | 5 |
| | Catalyst | 5 | 5 | 5 | 5 | 5 | 5 | 5 | 5 | 5 | 5 |
| | SPE 1 | 1 | 0.1 | | | | | | | | |
| | SPE 2 | | | 1 | 0.1 | | | | | | |
| | SPE 3 | | | | | 1 | 0.1 | | | | |
| | SPE 4 | | | | | | | 1 | 0.1 | | |
| | SPE 5 | | | | | | | | | 1 | 0.1 |
| | SPE 6 | | | | | | | | | | |
| Coating Film Performances | | | | | | | | | | | |
| | Low Tackiness | E | B | E | E | E | D | E | D | E | A |
| | Softness | C | C | C | D | E | E | B | C | B | C |
| | Elongation | E | E | C | E | E | E | B | E | A | E |

EP 1 934 397 B1

## TABLE IV (CONT'D)

| Run | | No. 11 | No. 12 | No. 13 | No. 14 | No. 15 | No. 16 | No. 17 | No. 18 | No. 19 | |
|---|---|---|---|---|---|---|---|---|---|---|---|
| Coating Composition (Unit: Parts by Weight) | | | | | | | | | | | |
| | Base composition | 100 | 100 | 100 | 100 | 100 | 100 | 100 | 100 | 100 | |
| | Pigment | 5 | 5 | 5 | 5 | 5 | 5 | 5 | 5 | 5 | |
| | Catalyst | 5 | 5 | 5 | 5 | 5 | 5 | 5 | 5 | 5 | |
| | SPE 1 | | | | | | | | | | |
| | SPE 2 | 0.5 | 2 | 3 | | | | | | | |
| | SPE 3 | | | | 2 | 4 | 5 | | | | |
| | SPE 4 | | | | | | | | | | |
| | SPE 5 | | | | | | | | | | |
| | SPE 6 | | | | | | | 1 | 0.1 | | |
| Coating Film Performances | | | | | | | | | | | |
| | Low Tackiness | E | E | E | E | E | E | E | A | A | |
| | Softness | D | B | A | D | B | A | B | C | D | |
| | Elongation | B | C | D | E | E | E | D | E | E | |

Rules No. 16 to No. 19 were for comparison.

EP 1 934 397 B1

**Claims**

1. A liquid silicone rubber composition for textile coating comprising:

   (A) 100 parts by weight of a liquid polydiorganosiloxane containing at least two alkenyl radicals in each molecule,
   (B) an organohydrogenpolysiloxane containing at least three silicon-bonded hydrogen atoms in each molecule, in an amount that the molar ratio of the total number of the silicon-bonded hydrogen atoms in this ingredient to the total quantity of all alkenyl radicals in ingredient (A) is from 0.5:1 to 20:1,
   (C) from 5 to 50 parts by weight of a reinforcing filler, based on the amount of ingredient (A),
   (D) from 0.05 to 4.5 parts by weight of a polydiorganosiloxane-polyether copolymer containing from 5 to 50 percent by mole of the polyether, based on 100 parts by weight of the combined weight of ingredients (A), (B), and (C), wherein the polydiorganosiloxane-polyether copolymer is represented by the formula:

   $$X_wR^1_{3-w}SiO(R^2R^3SiO)_d(R^4XSiO)_{d'}SiR^1_{3-w}X_w \quad (II)$$

   Wherein X is $-R^5-(OC_2H_4)_yOA)_zE$ in which $R^1$, $R^2$, $R^3$, and $R^4$ are independently selected from monovalent saturated hydrocarbon radicals and monovalent aromatic hydrocarbon radicals; E is identical or different and selected from hydroxy, alkoxy, and carboxyl; A and $R^5$ both denotes an alkylene; w is an integer of 0, 1, or 2, and must be 1 or 2 when d' is zero; d is an integer of 0 to 200, and d' is an integer of 0 to 15, where d and d' are to provide ingredient (D) containing from 5 to 50 percent by mole of polyether per molecule; y and z are independently integer of 0 to 30, the sum of y and z being in the range from 2 to 50, and
   (E) a hydrosilylation catalyst.

2. The liquid silicone rubber composition according to Claim 1, **characterised in that** ingredient (A) is represented by the general formula I:

   **R'R"R'''SiO-(R"R'''SiO)$_m$-SiR'''R"R' I**

   in which R' is an alkenyl radical; R" does not contain ethylenic unsaturation, and is identical or different and individually selected from monovalent saturated hydrocarbon radical and monovalent aromatic hydrocarbon radical; R''' is R' or R"; and m represents a degree of polymerization equivalent to that ingredient (A) has a viscosity of at least 0.1 Pa.s at 25 °C.

3. The liquid silicone rubber composition according to Claim 1 or 2, **characterised in that** ingredient (A) is selected from the group consisting of dimethylvinylsiloxy-terminated polydimethylsiloxane, dimethylvinylsiloxy-terminated polymethyl-3,3,3-trifluoropropylslioxane, dimethylvinylsiloxy-terminated dimethylsiloxane-3,3,3-trifluoropropylmethylsiloxne copolymer, and dimethylvinylsiloxy-terminated dimethylsiloxane/methylphenylsiloxane copolymer.

4. The liquid silicone rubber composition according to any preceding Claim , **characterised in that** ingredient (B) is selected from the group consisting of trimethylsiloxy-terminated methylhydrogenpolysiloxane, trimethylsiloxy-terminated polydimethylsiloxane-methylhydrogensiloxane, dimethylhydrogensiloxy-terminated dimethylsiloxane-methylhydrogensiloxane copolymers, dimethylsiloxane-methylhydrogensiloxane cyclic copolymers, copolymers composed of $(CH_3)_2HSiO_{1/2}$ units and $SiO_{4/2}$ units, and copolymers composed of $(CH_3)_3SiO_{1/2}$ units, $(CH_3)_2HSiO_{1/2}$ units and $SiO_{4/2}$ units.

5. The liquid silicone rubber composition according to any preceding Claim , **characterised in that** ingredient (C) is finely divided silica.

6. The liquid silicone rubber composition according to any preceding Claim, **characterised in that** $R^1$, $R^2$, $R^3$, and $R^4$ are methyl, $R^5$ is propylene, or iso-butytene, E is hydroxyl, methoxy, or acetoxy, and A is propylene, iso-propylene, or butylene.

7. The liquid silicone rubber composition according to any preceding Claim, **characterised in that** ingredient (E) is selected from the group consisting of platinum black, platinum metal on solid supports, chloroplatinic acids, alcohol solutions of chloroplatinic acid, and complexes of chloroplatinic acid with liquid ethylenically unsaturated compounds.

8. The liquid silicone rubber composition according to any preceding Claim, further comprising from 1 to 10 parts by weight of a chain extender as ingredient (F), which is a disiloxane or a low molecular weight polyorganosiloxane containing two silicon-bonded hydrogen atoms at the terminal positions.

9. A method for preparing the liquid silicone rubber composition according to any preceding Claim, comprising mixing ingredients (A) to (E) at ambient temperature.

10. A method for coating a textile, comprising coating the textile with a liquid silicone rubber composition and curing the resulting coating, **characterized in that** the liquid silicone rubber composition comprises:

(A) 100 parts by weight of a liquid polydiorganosiloxane containing at least two alkenyl radicals in each molecule,
(B) an organohydrogenpolysiloxane containing at least three silicon-bonded hydrogen atoms in each molecule, in an amount that the molar ratio of the total number of the silicon-bonded hydrogen atoms in this ingredient to the total quantity of all alkenyl radicals in ingredient (A) is from 0.5:1 to 20:1,
(C) from 5 to 50 parts by weight of a reinforcing filler, based on the amount of ingredient (A),
(D) from 0.05 to 4.5 parts by weight of a polydiorganosiloxane-polyether copolymer containing from 5 to 50 percent by mole of the polyether, based on 100 parts by weight of the combined weight of ingredients (A), (B), and (C), wherein the polydiorganosiloxane-polyether copolymer is represented by the formula:

$$X_w R^1_{3-w} SiO(R^2 R^3 SiO)_d R^4 XSiO)_{d'} SiR^1_{3-w} X_w \quad (II)$$

(wherein X is $-R^5-(OC_2H_4)_y(OA)_z E$)
in which $R^1$, $R^2$, $R^3$, and $R^4$ are independently selected from monovalent saturated hydrocarbon radicals and monovalent aromatic hydrocarbon radicals; E is identical or different and selected from hydroxy, alkoxy, and carboxyl; A and $R^5$ both denotes an alkylene; w is an integer of 0, 1, or 2, and must be 1 or 2 when d' is zero; d is an integer of 0 to 200, and d' is an integer of 0 to 15, where d and d' are to provide ingredient (D) containing from 5 to 50 percent by mole of polyether per molecule; y and z are independently integer of 0 to 30, the sum of y and z being in the range from 2 to 50 , and
(E) a hydrosilylation catalyst.

11. The method for coating a textile according to Claim10 , **characterised in that** ingredient (A) of the liquid silicone rubber composition is represented by the general formula (I):

$$R'R''R'''SiO-(R''R'''SiO)_m-SiR'''R''R' \quad (I)$$

in which R' is an alkenyl radical; R" does not contain ethylenic unsaturation, and is identical or different and individually selected from monovalent saturated hydrocarbon radical and monovalent aromatic hydrocarbon radical; R''' is R' or R"; and m represents a degree of polymerization equivalent to that ingredient (A) has a viscosity of at least 0.1 Pa.s at 25 °C.

12. The method for coating a textile according to Claim 10 or 11, **characterised in that** ingredient (A) of the liquid silicone rubber composition is selected from the group consisting of dimethylvinylsiloxy-terminated polydimethylsiloxane, dimethylvinylsiloxy-terminated polymethyl-3,3,3-trifluoropropylsiloxane, dimethylvinylsiloxy-terminated dimethylsiloxane-3,3,3-trifluoropropylmethylsiloxne copolymer, and dimethylvinylsiloxy-terminated dimethylsiloxane/methylphenylsiloxane copolymer.

13. The method for forming a coating layer onto a textile according to any one of Claims 10 to 12 **characterised in that** ingredient (B) of the liquid silicone rubber composition is selected from the group consisting of trimethylsiloxy-terminated methylhydrogenpolysiioxane, trimethylsiloxy-terminated polydimethylsiloxane-methylhydrogensiloxane, dimethylhydrogensiloxy-terminated dimethylsiloxane-methylhydrogensiloxane coploymers, dimethylsiloxane-methylhydrogensiloxane cyclic copolymers, copolymers composed of $(CH_3)_2 HSiO_{1/2}$ units and $SiO_{4/2}$ units, and copolymers composed of $(CH_3)_3 SiO_{1/2}$ units, $(CH_3)_2 HSiO_{1/2}$ units and $SiO_{4/2}$ units.

14. The method for coating a textile according to any one of Claims 10 to 13, **characterised in that** ingredient (C) of the liquid silicone rubber composition is finely divided silica.

15. The method for coating a textile according to any one of Claims 10 to 14, that $R^1$, $R^2$, $R^3$, and $R^4$ **characterised in that** $R^1$, $R^2$, $R^3$, and $R^4$ are methyl, $R^5$ is propylene or iso-butylene, E is hydroxyl, methoxy, or acetoxy, and A is propylene, iso-propylene, or butylene.

**16.** The method for coating a textile according to any one of Claims 10 to 15, **characterised in that** ingredient (E) of the liquid silicone rubber composition is selected from the group consisting of platinum black, platinum metal on solid supports, chloroplatinic acids, alcohol solutions of chloroplatinic acid, and complexes of chloroplatinic acid with liquid ethylenically unsaturated compounds.

**17.** The method for coating a textile according to any one of claims 10 to 16, **characterised in that** the liquid silicone rubber composition further comprises from 1 to 10 parts by weight of a chain extender as ingredient (F), which is a disiloxane or a low molecular weight polyorganosiloxane containing two silicon-bonded hydrogen atoms at the terminal positions.

**18.** The method for coating a textile according to any one of Claim 10 to 17, **Characterised in that** the textile is selected from the group consisting of cotton, polyester and nylon optionally containing elastic fiber.

**19.** The method for coating a textile in accordance with any one of claims 10 to 18 **characterised in that** the composition is applied by screen printing.

**20.** A textile coated with a cured composition in accordance with any one of claims 1 to 8.

**21.** Use of a composition in accordance with any one of claims 1 to 8 for coating a textile.

**22.** Use of a composition in accordance with any one of claims 1 to8 to screen print a coating onto a textile material.

**Patentansprüche**

**1.** Flüssige Siliconkautschukzusammensetzung zur Beschichtung von Textilien, umfassend:

(A) 100 Masseteile eines flüssigen Polydiorganosiloxans, das mindestens zwei Alkenylreste in jedem Molekül enthält,

(B) ein Organohydrogenpolysiloxan, das mindestens drei durch Silicium gebundene Wasserstoffatome in jedem Molekül enthält, in einer Menge, dass das Molverhältnis der Gesamtzahl der durch Silicium gebundenen Wasserstoffatome in diesem Bestandteil zur Gesamtmenge aller Alkenylreste im Bestandteil (A) 0,5 : 1 bis 20 : 1 beträgt,

(C) 5 bis 50 Masseteile eines Verstärkerfüllstoffs, basierend auf der Menge von Bestandteil (A),

(D) 0,05 bis 4,5 Masseteile eines Polydiorganosiloxan-Polyether-Copolymers mit einem Gehalt von 5 bis 50 Molprozent des Polyethers, basierend auf 100 Masseteilen des kombinierten Gewichts der Bestandteile (A), (B) und (C), wobei das Polydiorganosiloxan-Polyether-Copolymer dargestellt wird durch die Formel:

$$X_w R^1_{3-w} SiO(R^2 R^3 SiO)_d (R^4 XSiO)_{d'} SiR^1_{3-w} X_w \qquad (II),$$

wobei $X$ $-R^5-(OC_2H_4)_y(OA)_z E$ ist,
wobei $R^1$, $R^2$, $R^3$ und $R^4$ unabhängig ausgewählt sind aus einwertigen gesättigten Kohlenwasserstoffresten und einwertigen aromatischen Kohlenwasserstoffresten; E gleich oder verschieden und aus Hydroxy, Alkoxy und Carboxyl ausgewählt ist; A und $R^5$ jeweils ein Alkylen bezeichnen; w eine ganze Zahl von 0, 1 oder 2 ist und 1 oder 2 sein muss, wenn d' Null ist; d eine ganze Zahl von 0 bis 200 ist und d' eine ganze Zahl von 0 bis 15 ist, wobei d und d' Bestandteil (D) mit einem Gehalt von 5 bis 50 Molprozent an Polyether pro Molekül bereitstellen sollen; y und z unabhängig ganze Zahlen von 0 bis 30 sind, wobei die Summe von y und z im Bereich von 2 bis 50 liegt, und
(E) einen Hydrosilylierungskatalysator.

**2.** Flüssige Siliconkautschukzusammensetzung nach Anspruch 1, **dadurch gekennzeichnet, dass** Bestandteil (A) dargestellt wird durch die allgemeine Formel I:

$$R'R''R'''SiO-(R''R'''SiO)_m-SiR'''R''R' \quad I,$$

wobei R' ein Alkenylrest ist; R'' keine ethylenische Ungesättigtheit enthält und gleich oder verschieden ist und individuell aus einwertigem gesättigtem Kohlenwasserstoffrest und einwertigem aromatischem Kohlenwasserstoffrest ausgewählt ist; R''' gleich R' oder R'' ist; und m einen Polymerisationsgrad darstellt, der einer Viskosität von Bestandteil (A) von mindestens 0,1 Pa.s bei 25° C entspricht.

3. Flüssige Siliconkautschukzusammensetzung nach Anspruch 1 oder 2, **dadurch gekennzeichnet, dass** Bestandteil (A) ausgewählt ist aus der Gruppe bestehend aus Polydimethylsiloxan mit endständiger Dimethylvinylsiloxygruppe, Polymethyl-3,3,3-tri-fluorpropylsiloxan mit endständiger Dimethylvinylsiloxygruppe, Dimethylsiloxan-3,3,3-Trifluorpropylmethylsiloxan-Copolymer mit endständiger Dimethylvinylsiloxygruppe und Dimethylsiloxan-Methylphenylsiloxan-Copolymer mit endständiger Dimethylvinylsiloxygruppe.

4. Flüssige Siliconkautschukzusammensetzung nach einem vorangehenden Anspruch, **dadurch gekennzeichnet, dass** Bestandteil (B) ausgewählt ist aus der Gruppe bestehend aus Methylhydrogenpolysiloxan mit endständiger Trimethylsiloxygruppe, Polydimethylsiloxan-Methylhydrogensiloxan mit endständiger Trimethylsiloxygruppe, Dimethylsiloxan-Methylhydrogensiloxan-Copolymeren mit endständiger Dimethylhydrogensiloxygruppe, cyclischen Dimethylsiloxan-Methylhydrogensiloxan-Copolymeren, aus $(CH_3)_2HSiO_{1/2}$-Einheiten und $SiO_{4/2}$-Einheiten zusammengesetzten Copolymeren und aus $(CH_3)_3SiO_{1/2}$-Einheiten, $(CH_3)_2HSiO_{1/2}$-Einheiten und $SiO_{4/2}$-Einheiten zusammengesetzten Copolymeren.

5. Flüssige Siliconkautschukzusammensetzung nach einem vorangehenden Anspruch, **dadurch gekennzeichnet, dass** Bestandteil (C) fein zerkleinertes Siliciumdioxid ist.

6. Flüssige Siliconkautschukzusammensetzung nach einem vorangehenden Anspruch, **dadurch gekennzeichnet, dass** $R^1$, $R^2$, $R^3$ und $R^4$ Methyl sind, $R^5$ Propylen oder Isobutylen ist, E Hydroxyl, Methoxy oder Acetoxy ist und A Propylen, Isopropylen oder Butylen ist.

7. Flüssige Siliconkautschukzusammensetzung nach einem vorangehenden Anspruch, **dadurch gekennzeichnet, dass** Bestandteil (E) ausgewählt ist aus der Gruppe bestehend aus Platinmohr, Platinmetall auf festen Trägern, Chloroplatin(IV)-säuren, alkoholischen Lösungen von Chloroplatin(IV)-säure und Komplexen von Chloroplatin(IV)-säure mit flüssigen ethylenisch ungesättigten Verbindungen.

8. Flüssige Siliconkautschukzusammensetzung nach einem vorangehenden Anspruch, ferner umfassend: 1 bis 10 Masseteile eines Kettenaufbaumittels als Bestandteil (F), bei dem es sich um ein Disiloxan oder ein Polyorganosiloxan mit geringer relativer Molekülmasse handelt, das zwei durch Silicium gebundene Wasserstoffatome in Endstellung enthält.

9. Verfahren zur Herstellung der flüssigen Siliconkautschukzusammensetzung nach einem vorangehenden Anspruch, umfassend das Mischen der Bestandteile (A) bis (E) bei Umgebungstemperatur.

10. Verfahren zur Beschichtung eines Textilmaterials, umfassend: Beschichten des Textilmaterials mit einer flüssigen Siliconkautschukzusammensetzung und Vulkanisieren der erhaltenen Beschichtung, **dadurch gekennzeichnet, dass** die flüssige Siliconkautschukzusammensetzung umfasst:

(A) 100 Masseteile eines flüssigen Polydiorganosiloxans, das mindestens zwei Alkenylreste in jedem Molekül enthält,
(B) ein Organohydrogenpolysiloxan, das mindestens drei durch Silicium gebundene Wasserstoffatome in jedem Molekül enthält, in einer Menge, dass das Molverhältnis der Gesamtzahl der durch Silicium gebundenen Wasserstoffatome in diesem Bestandteil zur Gesamtmenge aller Alkenylreste im Bestandteil (A) 0,5 : 1 bis 20 : 1 beträgt,
(C) 5 bis 50 Masseteile eines Verstärkerfüllstoffs, basierend auf der Menge von Bestandteil (A),
(D) 0,05 bis 4,5 Masseteile eines Polydiorganosiloxan-Polyether-Copolymers mit einem Gehalt von 5 bis 50 Molprozent des Polyethers, basierend auf 100 Masseteilen des kombinierten Gewichts der Bestandteile (A), (B) und (C), wobei das Polydiorganosiloxan-Polyether-Copolymer dargestellt wird durch die Formel:

$$X_wR^1_{3-w}SiO(R^2R^3SiO)_d(R^4XSiO)_{d'}SiR^1_{3-w}X_w \quad (II)$$

(wobei X -$R^5$-$(OC_2H_4)y(OA)_zE$ ist),
wobei $R^1$, $R^2$, $R^3$ und $R^4$ unabhängig ausgewählt sind aus einwertigen gesättigten Kohlenwasserstoffresten und einwertigen aromatischen Kohlenwasserstoffresten; E gleich oder verschieden und aus Hydroxy, Alkoxy und Carboxyl ausgewählt ist; A und $R^5$ jeweils ein Alkylen bezeichnen; w eine ganze Zahl von 0, 1 oder 2 ist und 1 oder 2 sein muss, wenn d' Null ist; d eine ganze Zahl von 0 bis 200 ist und d' eine ganze Zahl von 0 bis 15 ist, wobei d und d' Bestandteil (D) mit einem Gehalt von 5 bis 50 Molprozent an Polyether pro Molekül bereitstellen sollen; y und z unabhängig ganze Zahlen von 0 bis 30 sind, wobei die Summe von y und z im Bereich von 2 bis 50 liegt, und

(E) einen Hydrosilylierungskatalysator.

11.  Verfahren zur Beschichtung eines Textilmaterials nach Anspruch 10, **dadurch gekennzeichnet, dass** Bestandteil (A) der flüssigen Siliconkautschukzusammensetzung dargestellt wird durch die allgemeine Formel (I):

R'R"R'''SiO-(R"R'''SiO)$_m$-SiR'''R"R'     (I)

wobei R' ein Alkenylrest ist; R" keine ethylenische Ungesättigtheit enthält und gleich oder verschieden ist und individuell aus einwertigem gesättigtem Kohlenwasserstoffrest und einwertigem aromatischem Kohlenwasserstoffrest ausgewählt ist; R''' gleich R' oder R" ist; und m einen Polymerisationsgrad darstellt, der einer Viskosität von Bestandteil (A) von mindestens 0,1 Pa.s bei 25° C entspricht.

12.  Verfahren zur Beschichtung eines Textilmaterials nach Anspruch 10 oder 11, **dadurch gekennzeichnet, dass** Bestandteil (A) der flüssigen Siliconkautschukzusammensetzung ausgewählt ist aus der Gruppe bestehend aus Polydimethylsiloxan mit endständiger Dimethylvinylsiloxygruppe, Polymethyl-3,3,3-trifluorpropylsiloxan mit endständiger Dimethylvinylsiloxygruppe, Dimethylsiloxan-3,3,3-Trifluorpropylmethyl-siloxan-Copolymer mit endständiger Dimethylvinylsiloxygruppe und Dimethylsiloxan-Methylphenylsiloxan-Copolymer mit endständiger Dimethylvinylsiloxygruppe.

13.  Verfahren zur Ausbildung einer Beschichtung auf einem Textilmaterial nach einem der Ansprüche 10 bis 12, **dadurch gekennzeichnet, dass** Bestandteil (B) der flüssigen Siliconkautschukzusammensetzung ausgewählt ist aus der Gruppe bestehend aus Methylhydrogenpolysiloxan mit endständiger Trimethylsiloxygruppe, Polydimethylsiloxan-Methylhydrogensiloxan mit endständiger Trimethylsiloxygruppe, Dimethylsiloxan-Methylhydrogensiloxan-Copolymeren mit endständiger Dimethylhydrogensiloxygruppe, cyclischen Dimethylsiloxan-Methylhydrogensiloxan-Copolymeren, aus (CH$_3$)$_2$HSiO$_{1/2}$-Einheiten und SiO$_{4/2}$-Einheiten zusammengesetzten Copolymeren und aus (CH$_3$)$_3$SiO$_{1/2}$-Einheiten, (CH$_3$)$_2$HSiO$_{1/2}$-Einheiten und SiO$_{4/2}$-Einheiten zusammengesetzten Copolymeren.

14.  Verfahren zur Beschichtung eines Textilmaterials nach einem der Ansprüche 10 bis 13, **dadurch gekennzeichnet, dass** Bestandteil (C) der flüssigen Siliconkautschukzusammensetzung fein zerkleinertes Siliciumdioxid ist.

15.  Verfahren zur Beschichtung eines Textilmaterials nach einem der Ansprüche 10 bis 14, dass R$^1$, R$^2$, R$^3$ und R$^4$ **dadurch gekennzeichnet, dass** R$^1$, R$^2$, R$^3$ und R$^4$ Methyl sind, R$^5$ Propylen oder Isobutylen ist, E Hydroxyl, Methoxy oder Acetoxy ist und A Propylen, Isopropylen oder Butylen ist.

16.  Verfahren zur Beschichtung eines Textilmaterials nach einem der Ansprüche 10 bis 15, **dadurch gekennzeichnet, dass** Bestandteil (E) der flüssigen Siliconkautschukzusammensetzung ausgewählt ist aus der Gruppe bestehend aus Platinmohr, Platinmetall auf festen Trägern, Chloroplatin(IV)-säuren, alkoholischen Lösungen von Chloroplatin (IV)-säure und Komplexen von Chloroplatin(IV)-säure mit flüssigen ethylenisch ungesättigten Verbindungen.

17.  Verfahren zur Beschichtung eines Textilmaterials nach einem der Ansprüche 10 bis 16, **dadurch gekennzeichnet, dass** die flüssige Siliconkautschukzusammensetzung ferner umfasst: 1 bis 10 Masseteile eines Kettenaufbaumittels als Bestandteil (F), bei dem es sich um ein Disiloxan oder ein Polyorganosiloxan mit geringer relativer Molekülmasse handelt, das zwei durch Silicium gebundene Wasserstoffatome in Endstellung enthält.

18.  Verfahren zur Beschichtung eines Textilmaterials nach einem der Ansprüche 10 bis 17, **dadurch gekennzeichnet, dass** das Textilmaterial ausgewählt ist aus der Gruppe bestehend aus Baumwolle, Polyester und Nylon, optional mit einem Gehalt an Elastikfaser.

19.  Verfahren zur Beschichtung eines Textilmaterials nach einem der Ansprüche 10 bis 18, **dadurch gekennzeichnet, dass** die Zusammensetzung mittels Siebdruck aufgebracht wird.

20.  Textilmaterial, das mit einer vulkanisierten Zusammensetzung nach einem der Ansprüche 1 bis 8 beschichtet ist.

21.  Verwendung einer Zusammensetzung nach einem der Ansprüche 1 bis 8 zur Beschichtung eines Textilmaterials.

**22.** Verwendung einer Zusammensetzung nach einem der Ansprüche 1 bis 8 zum Siebdrucken einer Beschichtung auf ein Textilmaterial.

**Revendications**

1. Composition de caoutchouc de silicone liquide pour enduire un textile, comprenant :

    (A) 100 parties en masse d'un polydiorganosiloxane liquide contenant au moins deux radicaux alcényles dans chaque molécule,

    (B) un organohydrogénopolysiloxane contenant au moins trois atomes d'hydrogène liés à la silicone dans chaque molécule, dans une quantité telle que le rapport molaire du nombre total des atomes d'hydrogène liés à la silicone dans cet ingrédient à la quantité totale de radicaux alcényles dans l'ingrédient (A) est compris entre 0,5:1 et 20:1,

    (C) entre 5 et 50 parties en masse d'un charge de renfort, sur la base de la quantité de l'ingrédient (A),

    (D) entre 0,05 et 4,5 parties en masse d'un copolymère de polydiorganosiloxane-polyéther contenant entre 5 et 50 pourcent en mole du polyéther, sur la base de 100 parties en masse du poids combiné des ingrédients (A), (B) et (C), dans laquelle le copolymère de polydiorganosiloxane-polyéther est représenté par la formule :

    $$X_w R^1{}_{3-w}SiO(R^2R^3SiO)_d(R^4XSiO)_{d'}SiR^1{}_{3-w}X_w \quad (II)$$

    où X est $-R^5-(OC_2H_4)_y(OA)_2E)$
    dans laquelle $R^1$, $R^2$, $R^3$ et $R^4$ sont indépendamment les uns des autres choisis parmi les radicaux hydrocarbonés saturés monovalents et les radicaux hydrocarbonés aromatiques monovalents ; E est identique ou différent et est choisi parmi l'hydroxy, l'alcoxy et le carboxyle ; A et $R^5$ désignent tous deux un alkylène ; w est un nombre entier égal à 0, 1 ou 2, et doit être égal à 1 ou 2 lorsque d' vaut zéro ; d est un nombre entier compris entre 0 et 200 et d' est un nombre entier compris entre 0 et 15, où d et d' sont destinés à fournir l'ingrédient (D) contenant entre 5 et 50 pourcent en mole de polyéther par molécule ; y et z sont indépendamment les uns des autres un nombre entier compris entre 0 et 30, la somme de y et z se situant dans la gamme de 2 à 50, et

    (E) un catalyseur d'hydrosilylation.

2. Composition de caoutchouc de silicone liquide selon la revendication 1, **caractérisée en ce que** l'ingrédient (A) est représenté par la formule générale I :

    $$R'R''R'''SiO-(R''R'''SiO)_m-SiR'''R''R' \quad (I)$$

    dans laquelle R' est un radical alcényle ; R" ne contient pas d'insaturation éthylénique, et est identique ou différent et est individuellement choisi parmi le radical hydrocarboné saturé monovalent et le radical hydrocarboné aromatique monovalent ; R''' est R' ou R" ; et m représente un degré de polymérisation équivalent à que l'ingrédient (A) à une viscosité d'au moins 0,1 Pa·s à 25 °C.

3. Composition de caoutchouc de silicone liquide selon la revendication 1 ou 2, **caractérisée en ce que** l'ingrédient (A) est choisi dans le groupe constitué par le polydiméthylsiloxane à terminaison diméthylvinylsiloxy, le polyméthyl-3,3,3-trifluoropropylsiloxane à terminaison diméthylvinylsiloxy, le copolymère de diméthylsiloxane-3,3,3-trifluoropropylméthylsiloxane à terminaison diméthylvinylsiloxy et le copolymère de diméthylsiloxane-méthylphénylsiloxane à terminaison diméthylvinylsiloxy.

4. Composition de caoutchouc de silicone liquide selon l'une quelconque des revendications précédentes, **caractérisée en ce que** l'ingrédient (B) est choisi dans le groupe constitué par le méthylhydrogénopolysiloxane à terminaison triméthylsiloxy, le polydiméthylsiloxane-méthylhydrogénosiloxane à terminaison triméthylsiloxy, les copolymères de diméthylsiloxane-méthylhydrogénosiloxane à terminaison diméthylhydrogénosiloxy, les copolymères cycliques de diméthylsiloxane-méthylhydrogénosiloxane, les copolymères constitués de motifs $(CH_3)_2HSiO_{1/2}$ et de motifs $SiO_{4/2}$ et les copolymères constitués de motifs $(CH_3)_3SiO_{1/2}$, de motifs $(CH_3)_2HSiO_{1/2}$ et de motifs $SiO_{4/2}$.

5. Composition de caoutchouc de silicone liquide selon l'une quelconque des revendications précédentes, **caractérisée en ce que** l'ingrédient (C) est de la silice finement divisée.

6. Composition de caoutchouc de silicone liquide selon l'une quelconque des revendications précédentes, **caractérisée**

**en ce que** R$^1$, R$^2$, R$^3$ et R$^4$ sont du méthyle, R$^5$ est du propylène ou de l'isobutylène, E est de l'hydroxyle, du méthoxy ou de l'acétoxy, et A est du propylène, de l'isopropylène ou du butylène.

7. Composition de caoutchouc de silicone liquide selon l'une quelconque des revendications précédentes, **caractérisée en ce que** l'ingrédient (E) est choisi dans le groupe constitué par le noir de platine, le métal platine sur des supports solides, les acides chloroplatiniques, les solutions alcooliques d'acide chloroplatinique et les complexes d'acide chloroplatinique avec des composés liquides éthyléniquement insaturés.

8. Composition de caoutchouc de silicone liquide selon l'une quelconque des revendications précédentes, comprenant en outre entre 1 et 10 parties en masse d'un allongeur de chaîne comme ingrédient (F), qui est un disiloxane ou un polyorganosiloxane de bas poids moléculaire contenant deux atomes d'hydrogène liés à la silicone aux positions terminales.

9. Procédé de préparation de la composition de caoutchouc de silicone liquide selon l'une quelconque des revendications précédentes, comprenant le mélange des ingrédients (A) à (E) à température ambiante.

10. Procédé d'enduction d'un textile, comprenant l'enduction du textile avec une composition de caoutchouc de silicone liquide et le durcissement de l'enduit obtenu, **caractérisé en ce que** la composition de caoutchouc de silicone liquide comprend :

    (A) 100 parties en masse d'un polydiorganosiloxane liquide contenant au moins deux radicaux alcényles dans chaque molécule,
    (B) un organohydrogénopolysiloxane contenant au moins trois atomes d'hydrogène liés à la silicone dans chaque molécule, dans une quantité telle que le rapport molaire du nombre total des atomes d'hydrogène liés à la silicone dans cet ingrédient à la quantité totale de radicaux alcényles dans l'ingrédient (A) est compris entre 0,5:1 et 20:1,
    (C) entre 5 et 50 parties en masse d'un charge de renfort, sur la base de la quantité de l'ingrédient (A),
    (D) entre 0,05 et 4,5 parties en masse d'un copolymère de polydiorganosiloxane-polyéther contenant entre 5 et 50 pourcent en mole du polyéther, sur la base de 100 parties en masse du poids combiné des ingrédients (A), (B) et (C), dans laquelle le copolymère de polydiorganosiloxane-polyéther est représenté par la formule :

$$X_wR^1{}_{3-w}SiO(R^2R^3SiO)_d(R^4XSiO)_{d'}SiR^1{}_{3-w}X_w \qquad (II)$$

(où X est -R$^5$-(OC$_2$H$_4$)$_y$(OA)$_z$E))
dans laquelle R$^1$, R$^2$, R$^3$ et R$^4$ sont indépendamment les uns des autres choisis parmi les radicaux hydrocarbonés saturés monovalents et les radicaux hydrocarbonés aromatiques monovalents ; E est identique ou différent et est choisi parmi l'hydroxy, l'alcoxy et le carboxyle ; A et R$^5$ désignent tous deux un alkylène ; w est un nombre entier égal à 0, 1 ou 2, et doit être égal à 1 ou 2 lorsque d' vaut zéro ; d est un nombre entier compris entre 0 et 200 et d' est un nombre entier compris entre 0 et 15, où d et d' sont destinés à fournir l'ingrédient (D) contenant entre 5 et 50 pourcent en mole de polyéther par molécule ; y et z sont indépendamment les uns des autres un nombre entier compris entre 0 et 30, la somme de y et z se situant dans la gamme de 2 à 50, et
    (E) un catalyseur d'hydrosilylation.

11. Procédé d'enduction d'un textile selon la revendication 10, **caractérisé en ce que** l'ingrédient (A) de la composition de caoutchouc de silicone liquide est représenté par la formule générale (I) :

$$R'R''R'''SiO-(R''R'''SiO)_m-SiR'''R''R' \qquad (I)$$

dans laquelle R' est un radical alcényle ; R'' ne contient pas d'insaturation éthylénique, et est identique ou différent et est individuellement choisi parmi le radical hydrocarboné saturé monovalent et le radical hydrocarboné aromatique monovalent ; R''' est R' ou R'' ; et m représente un degré de polymérisation équivalent à que l'ingrédient (A) à une viscosité d'au moins 0,1 Pa·s à 25 °C.

12. Procédé d'enduction d'un textile selon la revendication 10 ou 11, **caractérisé en ce que** l'ingrédient (A) de la composition de caoutchouc de silicone liquide est choisi dans le groupe constitué par le polydiméthylsiloxane à terminaison diméthylvinylsiloxy, le polyméthyl-3,3,3-trifluoropropylsiloxane à terminaison diméthylvinylsiloxy, le copolymère de diméthylsiloxane-3,3,3-trifluoropropylméthylsiloxane à terminaison diméthylvinylsiloxy et le copolymère de diméthylsiloxane-méthylphénylsiloxane à terminaison diméthylvinylsiloxy.

**13.** Procédé de formation d'une couche d'enduction sur un textile selon l'une quelconque des revendications 10 à 12, **caractérisé en ce que** l'ingrédient (B) de la composition de caoutchouc de silicone liquide est choisi dans le groupe constitué par le méthylhydrogénopolysiloxane à terminaison triméthylsiloxy, le polydiméthylsiloxane-méthylhydrogénosiloxane à terminaison triméthylsiloxy, les copolymères de diméthylsiloxane-méthylhydrogénosiloxane à terminaison diméthylhydrogénosiloxy, les copolymères cycliques de diméthylsiloxane-méthylhydrogénosiloxane, les copolymères constitués de motifs $(CH_3)_2HSiO_{1/2}$ et de motifs $SiO_{4/2}$ et les copolymères constitués de motifs $(CH_3)_3SiO_{1/2}$, de motifs $(CH_3)_2HSiO_{1/2}$ et de motifs $SiO_{4/2}$.

**14.** Procédé d'enduction d'un textile selon l'une quelconque des revendications 10 à 13, **caractérisé en ce que** l'ingrédient (C) de la composition de caoutchouc de silicone liquide est de la silice finement divisée.

**15.** Procédé d'enduction d'un textile selon l'une quelconque des revendications 10 à 14, que $R^1$, $R^2$, $R^3$ et $R^4$ **caractérisé en ce que** $R^1$, $R^2$, $R^3$ et $R^4$ sont du méthyle, $R^5$ est du propylène ou de l'isobutylène, E est de l'hydroxyle, du méthoxy ou de l'acétoxy, et A est du propylène, de l'isopropylène ou du butylène.

**16.** Procédé d'enduction d'un textile selon l'une quelconque des revendications 10 à 15, **caractérisé en ce que** l'ingrédient (E) de la composition de caoutchouc de silicone liquide est choisi dans le groupe constitué par le noir de platine, le métal platine sur des supports solides, les acides chloroplatiniques, les solutions alcooliques d'acide chloroplatinique et les complexes d'acide chloroplatinique avec des composés liquides éthyléniquement insaturés.

**17.** Procédé d'enduction d'un textile selon l'une quelconque des revendications 10 à 16, **caractérisé en ce que** la composition de caoutchouc de silicone liquide comprend en outre entre 1 et 10 parties en masse d'un allongeur de chaîne comme ingrédient (F), qui est un disiloxane ou un polyorganosiloxane de bas poids moléculaire contenant deux atomes d'hydrogène liés à la silicone aux positions terminales.

**18.** Procédé d'enduction d'un textile selon l'une quelconque des revendications 10 à 17, **caractérisé en ce que** le textile est choisi dans le groupe constitué par le coton, le polyester et le nylon contenant facultativement des fibres élastiques.

**19.** Procédé d'enduction d'un textile selon l'une quelconque des revendications 10 à 18, **caractérisé en ce que** la composition est appliquée par sérigraphie.

**20.** Textile enduit avec une composition durcie selon l'une quelconque des revendications 1 à 8.

**21.** Utilisation d'une composition selon l'une quelconque des revendications 1 à 8 pour enduire un textile.

**22.** Utilisation d'une composition selon l'une quelconque des revendications 1 à 8 pour sérigraphier un enduit sur un matériau textile.

**EP 1 934 397 B1**

**REFERENCES CITED IN THE DESCRIPTION**

**Patent documents cited in the description**

- JP H03100058 B
- JP 2002302607 A
- US 6761673 B
- JP H0987585 B
- EP 0398745 A
- US 6677393 B
- EP 0819735 A
- EP 0661398 A
- US 3419593 A
- US 3989887 A
- US 3445420 A
- US 5175325 A